(19)

Europäisches
Patentamt

European
Patent Office

Office européen
des brevets

(11) **EP 4 498 228 A1**

(12) **EUROPEAN PATENT APPLICATION**

(43) Date of publication:
**29.01.2025 Bulletin 2025/05**

(21) Application number: **24188775.1**

(22) Date of filing: **16.07.2024**

(51) International Patent Classification (IPC):
**G06F 7/483** (2006.01)      **G06F 7/487** (2006.01)
**G06F 7/499** (2006.01)      **G06F 7/544** (2006.01)
**G06F 7/491** (2006.01)      **G06F 7/498** (2006.01)

(52) Cooperative Patent Classification (CPC):
**G06F 7/5443; G06F 7/483; G06F 7/4912;
G06F 7/49915; G06F 7/49921; G06F 7/49957;
G06F 7/49963; G06F 7/49994;** G06F 2207/3824;
G06F 2207/4824

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 FR 2308018**

(71) Applicant: **Kalray
38330 Montbonnot Saint Martin (FR)**

(72) Inventors:
• **LE MAIRE, Julien
38700 La Tronche (FR)**
• **DUPONT DE DINECHIN, Benoit
38000 Grenoble (FR)**
• **ODINOT, Arnaud
38000 Grenoble (FR)**

(74) Representative: **de Jong, Jean Jacques et al
Omnipat
610 Chemin de Fabrègues
13510 Éguilles (FR)**

(54) **OPTIMIZED MULTIPLY-ACCUMULATE OPERATOR FOR AI CALCULATIONS**

(57)      The invention relates to a hardware hybrid multiply-accumulate operator configured to multiply a multiplicand (Op0) formatted as a floating-point number (FP32) by a multiplicand (Op1) formatted as an integer (INT32) and add an integer-formatted result of the multiplication to an operand (Op2) formatted as an integer (INT32).

Fig. 1

**EP 4 498 228 A1**

**Description**

**Technical Area**

The invention relates to deep learning techniques in the field of artificial intelligence, and more particularly to a hardware multiply-accumulate operator adapted to perform some of the calculations involved.

**Background**

In deep learning techniques, some of the layers of deep neural networks use arithmetic involving small integers (e.g. 8-bit integers, known as INT8) instead of the more hardware-intensive 32-bit floating-point arithmetic (FP32 number format according to the IEEE 754 standard).

Conventional deep learning techniques are based on a simple integer quantization transformation between FP32 floating-point numbers and INT8 numbers. A real number $X$ represented in FP32 format is mapped to an INT8 number $x$ within a given quantization domain defined by a 32-bit integer zero point $z$ (INT32) and an FP32 floating-point scaling factor $S$. The quantized number $X$, denoted $\sim X$, is then expressed by:

$$\sim X = (x - z)S$$

The number x in INT8 format is the one that is stored and used for arithmetic operations. The quantization domain corresponds to a low-resolution range of variation of the number $\sim X$ around a central value $z$ located in a high dynamic range (that of factor $S$, an FP32 number). As the values of $x$ evolve in the range [-128, 127], the range of variation of $\sim X$ becomes:

$$\sim X \in [(-128 - z)S, (127 - z)S]$$

This range of variation, which in practice is supposed to cover a Gaussian distribution of $X$ values around the zero point $z$, does not cover the entire range of variation of the number $X$. So, for values of $X$ outside the range, $\sim X$ is saturated at the boundaries of the range.

There may be one quantization domain per activation tensor (a multidimensional matrix of activation values), and a channel of the tensor (one of its dimensions) may sometimes have a different quantization domain. Once the FP32 numbers have been quantized, they may be exploited using resource-efficient operations on the small integers x.

Despite the advantages of this quantization, FP32 arithmetic is still used in calculations that modify the representation of tensor elements between quantization domains. FP32 arithmetic is more costly to implement in terms of performance, power consumption and silicon area.

**Summary**

A hybrid hardware multiply-accumulate operator is generally provided, configured to multiply a floating-point multiplicand by an integer multiplicand and add an integer multiplication result to an integer operand.

The operator may comprise a first multiplicand input for the floating-point multiplicand having a mantissa field and an exponent field; a second multiplicand input for the integer multiplicand; an accumulator input for the integer operand; an integer multiplier configured to multiply the mantissa field of the floating-point multiplicand by the integer multiplicand and produce a result in a fixed-point format corresponding to a zero exponent of the floating-point multiplicand; a shifter connected to receive the result of the multiplier and shift it left or right according to the value of the exponent field of the floating-point multiplicand; and an integer adder receiving the integer operand and a window on the result of the shifter, the window capturing a number of bits to the left of the fixed decimal point position equal to the number of bits of the integer operand to within one carry bit.

The left and right shift amplitude of the shifter may be limited to the number of bits of the integer operand and the operator may comprise a saturation circuit connected to the adder and the shifter and configured to produce the result of the adder when no bits to the left of the window are significant and the exponent field encodes a value less than the number of bits of the integer operand, and produce a saturated result when at least one bit to the left of the window is at a significant value, or the exponent field encodes a value greater than or equal to the number of bits in the integer operand.

The saturation circuit may be configured to round the adder result according to significant values of the bits to the right of the window.

## Brief Description of Drawings

The following non-limiting description is provided in relation to the attached drawings, among which:

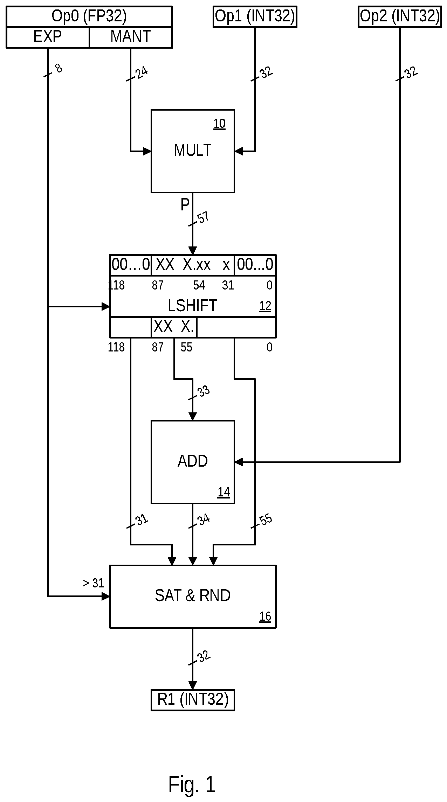

Figure 1 illustrates a block diagram of a hybrid multiplication and addition operator.

## Detailed Description

Hereinafter, a new type of hardware hybrid fused multiplication and addition (HFMA) operator is provided for efficient tensor conversion between different quantization domains. The structure of this HFMA operator results from a particular analysis and decomposition of the operations involved in converting between quantization domains. The resulting structure multiplies a signed integer (e.g. INT32) by a floating-point number (e.g. FP32), and adds a signed integer operand (INT32) to the product to provide an integer result in the same format as the operand. Since the result is in the same format as the addition operand, the structure may be used to calculate the accumulation of products, so it may also be referred to as a "Hybrid Multiply-ACcumulate" (HMAC) operator.

The most common calculation in deep learning networks is the accumulated scalar product of an activation vector $X_i$ by a weight vector $W_i$ with the addition of a bias $B_j$ according to the following relationship (as quantized values are exclusively referred to hereinafter, the prefix "-" is omitted to clarify the writing):

$$Y_j = \sum_{i=0}^{n} X_i W_i + B_j$$

Each of the terms is quantized in its own quantization domain, respectively $(z_y, S_y)$, $(z_x, S_x)$, $(0, S_w)$ and $(0, S_x S_w)$. The zero point of the weights $W_i$ and biases $B_j$ is 0. The quantization domain $(0, S_x S_w)$ of $B_j$ has the same scale factor as the quantization domain resulting from the product $X_i W_i$.

The different terms are expressed as follows:

$$X_i = (x_i - z_x) S_x$$

$$W_i = w_i S_w$$

$$B_j = S_x S_w b_j$$

$$Y_j = (y_j - z_y) S_y$$

Recall that values $S$ are FP32 scaling factors, values $z$ are INT32 zero points, and $x_i$ and $y_j$ are INT8 numbers used for storage and recurrent operations.

Making substitutions in these relations yields:

$$(y_j - z_y) S_y = S_x S_w \sum_{i=0}^{n} x_i w_i - z_x S_x S_w \sum_{i=0}^{n} w_i + S_x S_w b_j$$

The integer representing the quantified result is then expressed as:

$$y_j = int\left(z_y + \frac{S_x S_w}{S_y}\left(\sum_{i=0}^{n} x_i w_i + c_j\right)\right)$$

with

$$c_j = b_j - z_x \sum_{i=0}^{n} w_i$$

Each term $c_j$ is an INT32 integer constant that may be calculated off-line using simple integer arithmetic, such as a conventional multiply-accumulate (MAC) operator operating on INT32 integers. The sum $\sum_{i=0}^{n} w_i$ is an integer constant for the range of $j$ values that can be calculated once and stored to calculate all terms $c_j$.

The basic recurring calculation on index $j$, conventionally involving operations in FP32 arithmetic, becomes an integer product and addition operation that multiplies the INT32 integer $\sum_{i=0}^{n} x_i w_i + c_j$ by a real number $\frac{S_x S_w}{S_y}$ in FP32 format, and adds an INT32 integer $z_y$, the result again being an INT32 number. This is exactly what the HFMA operator calculates. The $y_j$ values are then saturated to fit back into an INT8 integer and stored and reused to represent the quantized $y_j$ values.

With conventional means, the operation would consist in converting the integer multiplicand and the integer addition operand into FP32 numbers, performing a fused multiplication and addition (FMA) of the resulting FP32 numbers, and converting the FP32 result into the INT32 integer, i.e. three or four operations instead of one, one of which involving a complex FMA operator fo FP32 numbers.

This gain in the number of operations occurs, in the above example, once every $n + 1$ iterations on $i$. In some cases, $n$ may be of the same order as the number of iterations on $j$, so that a gain of the order of $3n$ operations is obtained.

The HFMA operator may also be used for punctual operations such as the sum of quantized vectors:

$$Y_i = X_i + W_i$$

$$X_i = (x_i - z_x)S_x$$

$$W_i = (w_i - z_w)S_w$$

$$Y_j = (y_j - z_y)S_y$$

$$y_i = int\left((x_i - z_x)\frac{S_x}{S_y} + (w_i - z_w)\frac{S_w}{S_y}\right) + z_y$$

$$y_i \approx int\left((x_i - z_x)\frac{S_x}{S_y} + int\left((w_i - z_w)\frac{S_w}{S_y} + z_y\right)\right)$$

This corresponds to a nested application of the HFMA or HMAC operator (with two INT32 integer additions).

This calculation may be further optimized when the quantization domain of one of the inputs is the same as that of the output, which often occurs in practice. For example, if $S_x = S_y$ and $z_x = z_y$ then:

$$y_i = int\left(x_i + \frac{(w_i - z_w)S_w}{S_y}\right)$$

This corresponds to a single application of the HMAC operator (with one addition of INT32 integers).

The HMAC operator may also be used in combination with an operator designated FSCALE to quantize FP32 values to INT8 values without involving FP32 arithmetic. An FSCALE operation scales an FP32 value by an integer power of two, in the form of a simple integer addition over the 8-bit exponent field of the FP32 numerical representation.

For example, the case of $X_i = (x_i - z_x)S_x$ with $\dfrac{1}{S_x} = 2^e m$ yields:

$$x_i = int\left(\frac{X_i}{S_x} + z_x\right) = int(FSCALE(X_i, e)m + z_x)$$

Here, the FSCALE operation produces an FP32 result, while e is INT8, and $m$ and z are INT32. Thus, the calculation of $x_i$ is once again an HMAC calculation, producing an INT32 value which will be transformed into an INT8 value.

Figure 1 shows a block diagram of a hybrid multiplication and addition (or accumulation) operator. The operator is configured to perform the operation Op0 • Op1 + Op2, where multiplicand Op0 is a floating-point number, e.g. FP32, multiplicand Op1 is an integer, e.g. INT32, and operand Op2 is an integer of the same format (INT32) as operand Op1.

The floating-point multiplicand Op0 includes an 8-bit exponent field EXP and a 24-bit mantissa field MANT. The mantissa field MANT of the operator Op0, treated as an integer, and the integer multiplicand Op1 are supplied to an integer multiplier 10. The multiplier 10 produces a 57-bit product P. The product P is in fact a fixed-point number whose position is chosen by convention for an exponent EXP equal to 0. In this case, the product corresponds to the multiplication of a number 1.xx... xx with 24 bits after the decimal point by an integer XX... XX of 32 bits (in front of the decimal point), so that the fixed decimal point is positioned between the bits 23 and 24 of the 57-bit product P.

A left-shift circuit 12 receives product P at positions 31 and 87 of a 119-bit virtual number having 31 bits at 0 to the right of product P and 31 bits at 0 to the left of product P. The shifting of circuit 12 is controlled by the exponent EXP of multiplicand Op0. When this exponent is positive, circuit 12 performs a corresponding shift to the left. When the exponent is negative, circuit 12 performs a corresponding shift to the right.

The "useful" output of shifter 12 is taken from a window covering positions 55 to 87 of the shifted number, i.e. the 33 bits in front of the fixed decimal point, forming a 32-bit integer with a carry bit. The unused bits to the right of the window are used for rounding, while the unused bits to the left are used for saturation.

Note that the considered amplitude of the left or right shift is the size of the integer addition operand, here 32 bits (31 plus the position without a shift for exponent zero), corresponding to a signed exponent of 6 bits instead of 8 bits. This constrained amplitude corresponds to the limit positions where significant bits of the shifted product may still be in the window and form a usable integer. On the left, this corresponds to the product of an integer equal to 1 and a float with exponent +31. On the right, this corresponds to the product of an integer whose most significant bit is 1 and a float with exponent -31. Beyond an exponent of ±31, the result is systematically saturated or rounded to 0.

The contents of the 33-bit window are supplied to an adder 14, which also receives the 32-bit integer operand Op2. The adder 14 produces a 34-bit result, the 34th bit being a carry bit.

The result of adder 14 is fed to a saturation and rounding circuit 16, which also receives the 55 bits to the right and the 31 bits to the left of the window of shifter 12. Circuit 16 produces a final result R1 in the form of a signed integer INT32, under the following conditions.

The result R1 is saturated to the largest positive integer when at least one of the following conditions is met:

• the exponent is greater than +31, the integer multiplicand Op1 is non-zero and the sign of the multiplication is positive,

• at least one of the 31 bits to the left of the window is 1 and the sign of the multiplication is positive, or

• one of the two most significant bits of the result (bits 32 and 33) of the addition is at 1.

The result R1 is saturated to the smallest negative integer when at least one of the following conditions is met:

• the exponent is less than -31, the integer multiplicand Op1 is non-zero and the sign of the multiplication is negative,

• at least one of the 31 bits to the left of the window is 1 and the sign of the multiplication is negative, or

• one of the two most significant bits of the addition result is 0.

In the description of the circuit shown in Fig. 1, it has been assumed for sake of clarity that the numbers are positive. In practice, the numbers are signed so that, for negative numbers, the significant value of the bits is 0 instead of 1. The circuit shown in Fig. 1 is extended in a known way to handle negative numbers as well, and to invert the required bits according to a sign bit. For example, for a negative product P, the bits to the left and right at the input of shifter 12 are all 1 instead of 0.

Furthermore, since the operator involves a floating-point number FP32 as a multiplicand, this number may be indefinite (NaN) or infinite in certain situations. If it is infinite and the integer multiplicand Op1 is non-zero, the result R1 is saturated to the largest positive integer or the smallest negative integer, depending on the sign of the result. If it is indefinite or infinite and multiplied by a zero integer, the result R1 may be saturated by convention, for example to the smallest negative integer.

Finally, the result R1 is rounded according to the bits of significant value on the right side of the window, for example according to the IEEE 754 standard governing floating-point numbers.

The operator may also raise the IEEE 754 overflow, underflow, inaccuracy and invalidity flags. The underflow flag is raised when the non-rounded result is non-zero and strictly between -1 and 1 (so-called subnormal numbers).

**Claims**

1. A hybrid hardware multiply-accumulate operator configured to multiply a multiplicand (Op0) formatted as a floating-point number (FP32) by a multiplicand (Op1) formatted as an integer number (INT32) and add a result of the multiplication to an operand (Op2) formatted as an integer number (INT32), wherein the result of the multiplication is an integer number of the same format as the operand, except for a carry bit.

2. An operator according to claim 1, comprising:

   a first multiplicand input (Op0) for the floating-point multiplicand having a mantissa field (MANT) and an exponent field (EXP);
   a second multiplicand input (Op1) for the integer multiplicand;
   an accumulator input (Op2) for the integer operand;
   an integer multiplier (10) configured to multiply the mantissa field of the floating-point multiplicand by the integer multiplicand and produce a result in a fixed-point format corresponding to a zero exponent of the floating-point multiplicand;
   a shifter (12) connected to receive the result of the multiplier and shift it left or right according to the value of the exponent field of the floating-point multiplicand; and
   an integer adder (14) receiving the integer operand (Op2) and a window on the result of the shifter, the window capturing a number of bits to the left of the fixed decimal point position equal to the number of bits of the integer operand to within one carry bit.

3. The operator according to claim 2, wherein the left and right shift amplitude of the shifter is limited to the number of bits of the integer operand and the operator comprises a saturation circuit (16) connected to the adder and the shifter and configured to:

   produce the result of the adder when no bits to the left of the window are significant and the exponent field encodes a value less than the number of bits of the integer operand, and
   produce a saturated result when at least one bit to the left of the window is at a significant value, or the exponent field encodes a value greater than or equal to the number of bits in the integer operand.

4. The operator according to claim 3, wherein the saturation circuit (16) is configured to round the adder result according to significant values of the bits to the right of the window.

Fig. 1

# EP 4 498 228 A1

Europäisches
Patentamt

European
Patent Office

Office européen
des brevets

# EUROPEAN SEARCH REPORT

**Application Number**

EP 24 18 8775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANGZHEN LAI ET AL: "Deep Convolutional Neural Network Inference with Floating-point Weights and Fixed-point Activations", ARXIV.ORG, CORNELL UNIVERSITY LIBRARY, 201 OLIN LIBRARY CORNELL UNIVERSITY ITHACA, NY 14853, 9 March 2017 (2017-03-09), XP080755374, | 1,2 | INV. G06F7/483 G06F7/487 G06F7/499 G06F7/544 G06F7/491 G06F7/498 |
| A | * figures 3,14 * <br> * paragraph [0003] - paragraph [0004] * <br> ----- | 3,4 | |
| X | US 2022/180171 A1 (SUN XIAO [US] ET AL) 9 June 2022 (2022-06-09) | 1 | |
| A | * figures 5A-5E * <br> * paragraph [0034] - paragraph [0038] * <br> * paragraph [0068] - paragraph [0094] * <br> ----- | 2-4 | |
| A | JIANG HONGLAN ET AL: "Low-Power Approximate Unsigned Multipliers With Configurable Error Recovery", IEEE TRANSACTIONS ON CIRCUITS AND SYSTEMS I: REGULAR PAPERS, IEEE, US, vol. 66, no. 1, 1 January 2019 (2019-01-01), pages 189-202, XP011699696, ISSN: 1549-8328, DOI: 10.1109/TCSI.2018.2856245 [retrieved on 2018-12-06] * paragraphs [000I], [00II], [VIII] * <br> ----- | 1-4 | **TECHNICAL FIELDS SEARCHED (IPC)** <br><br> G06F |
| A | WO 2022/119718 A1 (FLEX LOGIX TECH INC [US]) 9 June 2022 (2022-06-09) * figures 8A-8C * * paragraph [0120] - paragraph [0144] * <br> ----- | 1-4 | |
| A | US 2021/311703 A1 (KIM HYUNPIL [KR] ET AL) 7 October 2021 (2021-10-07) * paragraph [0049] - paragraph [0086] * <br> ----- | 1-4 | |

The present search report has been drawn up for all claims

| Place of search | Date of completion of the search | Examiner |
|---|---|---|
| Munich | 27 November 2024 | Bec, Thierry |

EP 4 498 228 A1

## ANNEX TO THE EUROPEAN SEARCH REPORT
## ON EUROPEAN PATENT APPLICATION NO.

EP 24 18 8775

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 2022180171 A1 | 09-06-2022 | NONE | |
| WO 2022119718 A1 | 09-06-2022 | US 2022171604 A1 | 02-06-2022 |
| | | WO 2022119718 A1 | 09-06-2022 |
| US 2021311703 A1 | 07-10-2021 | CN 113496278 A | 12-10-2021 |
| | | DE 102021108536 A1 | 07-10-2021 |
| | | US 2021311703 A1 | 07-10-2021 |